# EUROPÄISCHE PATENTSCHRIFT

(11) **EP 3 578 942 B1**
(45) Veröffentlichungstag und Bekanntmachung des Hinweises auf die Patenterteilung: **01.05.2024**
(21) Anmeldenummer: 18176650.2
(22) Anmeldetag: 07.06.2018
(51) Int. Cl.: G01L 1/22

(54) **VORRICHTUNGEN UND VERFAHREN ZUR MESSUNG VON KRÄFTEN**
APPARATUS AND PROCEDURES FOR MEASURING FORCES
APPAREILS ET PROCEDES POUR MESURER DES FORCES

(43) Veröffentlichungstag der Anmeldung: 11.12.2019
(73) Patentinhaber: Amazonen-Werke H. Dreyer SE & Co. KG, 49205 Hasbergen (DE)
(72) Erfinder: Görsch, Florian, 80804 München (DE)

(56) Entgegenhaltungen:
- EP-A1- 1 319 931
- EP-A2- 0 816 817
- EP-A2- 2 267 425
- EP-B1- 1 319 931
- WO-A1-2005/036117
- US-A1- 2011 277 560

## Beschreibung

### TECHNISCHES GEBIET

Die vorliegende Erfindung bezieht sich auf Vorrichtungen und Verfahren zum Messen von Kräften, die von einem Bauteil auf ein anderes Bauteil übertragenen werden. Insbesondere bezieht sich die vorliegende Erfindung auf Kraftaufnehmer zur Messung von Radkräften.

### STAND DER TECHNIK

Aus der DE 38 24 636 A1 ist ein Kraftaufnehmer, insbesondere für Waagen, bekannt. Der Kraftaufnehmer umfasst einen als Doppelbiegebalken ausgebildeten Biegekörper mit auf diesem angeordneten Dehnungsmessstreifen. Der Biegekörper weist ferner an seinen beiden einander gegenüberliegenden Stirnseiten zwei mit ihm in axialer Ausrichtung fest verbundene Endstücke auf, die der freitragenden Aufspannung des Kraftaufnehmers bzw. der Krafteinleitung in den Biegekörper dienen. Die Endstücke sind dabei aus einem anderen Werkstoff als der Biegekörper gefertigt und jeweils formschlüssig mit letzterem verbunden. Diese formschlüssige Verbindung zwischen dem Biegekörper und den Endstücken erfolgt durch axial ausgerichtete, zylindrische Zapfen, die in entsprechende Bohrungen eingreifen. Eine Vorrichtung gemäß dem Oberbegriff des Anspruchs 1 ist aus WO 2005/036117 A1, EP 1 319 931 A1 und EP 2 267 425 A2 bekannt. Weiterer Stand der Technik kann aus der EP 0 816 817 A2 oder der US 2011/277560 A1 entnommen werden.

### KURZBESCHREIBUNG DER ERFINDUNG

Die Erfindung bereichert den Stand der Technik, als erfindungsgemäße Vorrichtungen, Messräder und Verfahren eine gleichzeitige Messung mehrerer Kraftkomponenten ermöglichen. Dazu wird ein Kraftaufnehmer eingesetzt, der aus mehreren in Reihe verbundenen Doppelbiegebalken aufgebaut ist. Die Doppelbiegebalken sind so ausgelegt/angeordnet, dass sie auf Belastungen aus unterschiedlichen Richtungen bevorzugt ansprechen, so dass mehrere Komponenten einer auf den Kraftaufnehmer wirkenden Kraft separat und zeitgleich erfasst werden können.

Eine erfindungsgemäße Vorrichtung umfasst einen Kraftaufnehmer mit einem ersten Oberflächenbereich, ausgebildet zur form- oder kraftschlüssigen Verbindung mit einem ersten Bauteil und zwei zweiten Oberflächenbereichen, ausgebildet zur form- oder kraftschlüssigen Verbindung mit einem zweiten Bauteil. Eine erfindungsgemäße Vorrichtung weist ferner einen ersten Doppelbiegebalken, über den die zwei zweiten Oberflächenbereiche verbunden sind und zwei zweite Doppelbiegebalken, über die der erste Oberflächenbereich mit dem ersten Doppelbiegebalken verbunden ist, auf, wobei eine auf das erste Bauteil wirkende Kraft durch besagte Doppelbiegebalken auf das zweite Bauteil übertragen wird.

Eine erfindungsgemäße Vorrichtung umfasst des Weiteren ein erstes Dehnungsmessstreifenpaar, wobei die Dehnungsmessstreifen des ersten Dehnungsmessstreifenpaars am ersten Doppelbiegebalken angeordnet sind, ein zweites Dehnungsmessstreifenpaar, wobei die Dehnungsmessstreifen des zweiten Dehnungsmessstreifenpaars an Biegebalken der zwei zweiten Doppelbiegebalken angeordnet sind, und einen Schaltkreis. Der Schaltkreis ist eingerichtet zum Messen einer in eine erste kraftaufnehmerfeste Richtung auf besagten ersten Doppelbiegebalken wirkenden Kraft auf Basis von Messsignalen, die mittels des ersten Dehnungsmessstreifenpaars erzeugt werden und einer in eine zweite kraftaufnehmerfeste Richtung auf besagte zweite Doppelbiegebalken wirkenden Kraft auf Basis von Messsignalen, die mittels des zweiten Dehnungsmessstreifenpaars erzeugt werden, wobei die erste kraftaufnehmerfeste Richtung und die zweite kraftaufnehmerfeste Richtung unterschiedlich sind.

Dabei ist unter dem Begriff "Kraftaufnehmer", wie er in der Beschreibung und den Ansprüchen verwendet wird, insbesondere ein Bauteil zu verstehen, das dazu ausgebildet ist, sich bei Beaufschlagung mit einer Kraft im Nominalbereich (an zur Messung der Kraft vorgesehenen Stellen) elastisch zu verformen. Des Weiteren ist unter der Formulierung "Oberflächenbereich, ausgebildet zur form- oder kraftschlüssigen Verbindung mit einem zweiten Bauteil", wie er in der Beschreibung und den Ansprüchen verwendet wird, insbesondere ein Bereich der Oberfläche zu verstehen, an dem besagtes Bauteil oder ein mit dem Bauteil verbundenes Verbindungsmittel (z. B. eine Schraube, ein Bolzen, etc.) anliegt (wenn der Kraftaufnehmer mit dem besagten Bauteil verbunden ist).

Ferner ist unter dem Begriff "Doppelbiegebalken", wie er in der Beschreibung und den Ansprüchen verwendet wird, insbesondere eine Struktur zu verstehen, die zwei parallele Kraftübertragungspfade zwischen dem ersten Bauteil und dem zweiten Bauteil bereitstellt. Die durch die Struktur gebildeten parallelen Kraftübertragungspfade können dabei zu einer Längsachse der Struktur spiegelsymmetrisch sein. Zudem kann die Querschnittsfläche eines durch die Struktur gebildeten Kraftübertragungspfades an einer Stelle, an der ein Dehnungsmessstreifen angeordnet ist, ein relatives Minimum aufweisen.

Des Weiteren sind unter dem Begriff "Dehnungsmessstreifenpaar", wie er in der Beschreibung und den Ansprüchen verwendet wird, insbesondere zwei (baugleiche) Dehnungsmessstreifen zu verstehen, deren Widerstand sich gegenläufig ändert, wenn durch den Doppelbiegebalken (an dem die Dehnungsmessstreifen angeordnet sind) eine Kraft quer zur Längsachse der Struktur (durch welche der Doppelbiegebalken gebildet wird) vom ersten Bauteil auf das zweite Bauteil übertragen wird. Die Dehnungsmesstreifen können dabei zur Längsachse der Struktur spiegelsymmetrisch angeordnet sein, so dass eine in Richtung der Längsachse wirkende Kraft die Widerstände der Dehnungsmessstreifen (des Dehnungsmessstreifenpaars) nicht gegenläufig ändert.

Zudem ist unter dem Begriff "Schaltkreis", wie er in der Beschreibung und den Ansprüchen verwendet wird, insbesondere ein Zusammenschluss von elektrischen (und insbesondere elektronischen) Bauelementen zu einer (funktionierenden) Anordnung zu verstehen. Ferner ist unter der Formulierung "kraftaufnehmerfeste Richtung", wie sie in der Beschreibung und den Ansprüchen verwendet wird, insbesondere eine Richtung in einem Koordinatensystem zu verstehen, die/das bezüglich des Kraftaufnehmers körperfest ist. Des Weiteren ist unter dem Begriff "Messsignal", wie er in der Beschreibung und den Ansprüchen verwendet wird, insbesondere ein elektrisches Signal zu verstehen, wie bspw. ein Spannungs- oder Strompegel.

Vorzugsweise sind die zwei zweiten Doppelbiegebalken zwischen Biegebalken des ersten Doppelbiegebalkens angeordnet.

Dies erhöht die Symmetrie des Kraftaufnehmers und verbessert dadurch die Messgenauigkeit.

Erfindungsgemäß weist der Kraftaufnehmer ferner vier dritte Doppelbiegebalken auf und ist ein erster der zwei zweiten Oberflächenbereiche über zwei der dritten Doppelbiegebalken mit dem ersten Doppelbiegebalken verbunden und ist ein zweiter der zwei zweiten Oberflächenbereiche über zwei der dritten Doppelbiegebalken mit dem ersten Doppelbiegebalken verbunden. Die Vorrichtung weist erfindungsgemäß ferner ein drittes Dehnungsmessstreifenpaar auf, wobei die Dehnungsmessstreifen des dritten Dehnungsmessstreifenpaars an Biegebalken der vier dritten Doppelbiegebalken angeordnet sind. Erfindungsgemäß ist der Schaltkreis ferner eingerichtet, eine in eine dritte kraftaufnehmerfeste Richtung auf besagte dritte Doppelbiegebalken wirkende Kraft auf Basis von Messsignalen, die mittels des dritten Dehnungsmessstreifenpaars erzeugt werden, zu messen, wobei die erste kraftaufnehmerfeste Richtung, die zweite kraftaufnehmerfeste Richtung und die dritte kraftaufnehmerfeste Richtung unterschiedlich sind.

Dies ermöglicht, wenn die erste, zweite und dritte kraftaufnehmerfeste Richtung nicht in einer Ebene liegen, eine Verwendung der Vorrichtung als dreidimensionaler Kraftsensor.

Erfindungsgemäß sind die kraftaufnehmerfesten Richtungen zueinander orthogonal.

Dies erhöht die Präzision der Erfassung der Kraftrichtung.

Vorzugsweise ist der Kraftaufnehmer als monolithisches Bauteil ausgebildet.

Dies reduziert die Größe des Kraftaufnehmers.

Vorzugsweise weist das monolithische Bauteil, betrachtet aus der ersten oder zweiten kraftaufnehmerfesten Richtung, eine rechteckige Kontur auf.

Dies vereinfacht die Verbindung des Kraftaufnehmers mit dem ersten und dem zweiten Bauteil.

Vorzugsweise ist das monolithische Bauteil plattenförmig und sind die Doppelbiegebalken durch Ausnehmungen in dem plattenförmigen Bauteil ausgeformt.

Dies erleichtert die Herstellung des Kraftaufnehmers. Bspw. können die Ausnehmungen in das plattenförmige Bauteil gebohrt oder gefräst werden.

Vorzugsweise ist das monolithische Bauteil plattenförmig und weist Ausnehmungen auf, in denen die Dehnungsmessstreifen angeordnet sind.

Dadurch sind die Dehnungsmessstreifen vor Beschädigung geschützt.

Vorzugsweise sind die Dehnungsmessstreifen spiegelsymmetrisch zu einer Spiegelsymmetrieachse des Doppelbiegebalkens, an dem das jeweilige Dehnungsmessstreifenpaar angeordnet ist, platziert.

Dadurch können Kraftkomponenten entlang einer Achse in beide Richtungen mit ähnlicher Präzision erfasst werden.

Ein erfindungsgemäßes Messrad umfasst eine Vorrichtung gemäß Anspruch 1, wobei zwei baugleiche, plattenförmige, monolithische Kraftaufnehmer, die eingerichtet und vorgesehen sind, eine Nabe des Messrads mit einer Felge des Messrads zu verbinden und auf die Radnabe wirkende Kräfte auf die Felge zu übertragen. Jeder der zwei Kraftaufnehmer umfasst einen ersten Doppelbiegebalken, der mit einem ersten Dehnungsmessstreifenpaar versehen ist, wobei der erste Doppelbiegebalken durch in den Kraftaufnehmer eingebrachte erste Ausnehmungen ausgebildet ist, und zwei zweite Doppelbiegebalken, die mit einem zweiten Dehnungsmessstreifenpaar versehen sind, wobei die zwei zweiten Doppelbiegebalken durch in den Kraftaufnehmer eingebrachte zweite Ausnehmungen ausgebildet sind und die Dehnungsmessstreifen des zweiten Dehnungsmessstreifenpaars in einer oder zwei der zweiten Ausnehmungen angeordnet sind.

Zudem umfasst das Messrad einen Schaltkreis, eingerichtet zum Messen einer in eine erste kraftaufnehmerfeste Richtung auf besagten ersten Doppelbiegebalken wirkenden Kraft auf Basis von Messsignalen, die mittels des ersten Dehnungsmessstreifenpaars erzeugt werden und einer in eine zweite kraftaufnehmerfeste Richtung auf besagte zweite Doppelbiegebalken wirkenden Kraft auf Basis von Messsignalen, die mittels des zweiten Dehnungsmessstreifenpaars erzeugt werden, wobei die erste kraftaufnehmerfeste Richtung und die zweite kraftaufnehmerfeste Richtung unterschiedlich sind.

Dabei ist unter dem Begriff "Messrad", wie er in der Beschreibung und den Ansprüchen verwendet wird, insbesondere ein Rad zu verstehen, welches einen Sensor zur Ermittlung von Radkräften umfasst. Wenn die erste und zweite Richtung orthogonal zur Drehachse des Messrads ist, kann durch Verwendung eines oder mehrerer Messräder die Belastung der Fahrzeugachse(n) ermittelt werden. Zudem kann ein Messrad bei ungefederten Fahrzeugen dazu verwendet werden, die Beladung des Fahrzeugs zu ermitteln und eine beladungsabhängige Bremsanlage zu steuern.

Erfindungsgemäß umfasst jeder der zwei Kraftaufnehmer jeweils vier dritte Doppelbiegebalken, die mit einem dritten Dehnungsmessstreifenpaar versehen sind, wobei die vier dritten Doppelbiegebalken durch in den jeweiligen Kraftaufnehmer eingebrachte dritte Ausnehmungen ausgebildet sind und die Dehnungsmessstreifen des dritten Dehnungsmessstreifenpaars in einer oder zwei der dritten Ausnehmungen angeordnet sind. Erfindungsgemäß ist der Schaltkreis ferner eingerichtet, eine in eine dritte kraftaufnehmerfeste Richtung auf besagte dritte Doppelbiegebalken wirkende Kraft auf Basis von Messsignalen, die mittels des dritten Dehnungsmessstreifenpaars erzeugt werden, zu messen, wobei die erste kraftaufnehmerfeste Richtung, die zweite kraftaufnehmerfeste Richtung und die dritte kraftaufnehmerfeste Richtung unterschiedlich sind.

Dadurch kann, wenn die dritte kraftaufnehmerfeste Richtung bspw. in Richtung der Radachse zeigt, auch eine axiale Belastung der Radachse (bspw. bei Kurvenfahrten) ermittelt werden.

Vorzugsweise sind die zwei baugleichen, plattenförmigen, monolithischen Kraftaufnehmer parallel oder orthogonal zueinander angeordnet.

Dadurch können mehrere Dehnungsmesstreifen in Reihe geschaltet werden, wodurch die Genauigkeit des Messergebnisses weiter gesteigert werden kann.

Vorzugsweise umfasst das Messrad ferner einen Drehwinkelsensor, eingerichtet zur Erfassung einer Drehung des Messrads.

Dadurch können bspw. die in horizontaler und vertikaler Richtung auf die Achse wirkenden Kräfte ermittelt werden.

Vorzugsweise ist das Messrad in einem Fahrzeug mit einer Speichervorrichtung zur Aufzeichnung von auf die Radnabe wirkenden Kräften während einer Fahrt des Fahrzeugs umfasst.

Dadurch können Testfahrten aufgezeichnet und zu einem späteren Zeitpunkt ausgewertet werden.

Ein erfindungsgemäßes Verfahren umfasst ein Versehen eines Fahrzeugs mit einem Messrad, welches eine Radnabe und eine Radfelge aufweist, die mittels eines oder mehrerer monolithischer Kraftaufnehmer aneinander befestigt sind, wobei einer oder mehrere der Kraftaufnehmer aus orthogonal zueinander angeordneten Doppelbiegebalken aufgebaut sind, an denen Dehnungsmessstreifenpaare zur Erfassung von auf die Doppelbiegebalken wirkenden Kräften angeordnet sind, und ein Ableiten von auf die Radnabe wirkenden Kräften aus den auf die Doppelbiegebalken wirkenden Kräften und einem jeweiligen Raddrehwinkel.

Dabei versteht es sich, dass alle Merkmale (bevorzugter Ausführungsformen) erfindungsgemäßer Vorrichtungen/Messräder auch Merkmale (bevorzugter Ausführungsformen) des erfindungsgemäßen Verfahrens sein können, welches eine (mögliche) Verwendung erfindungsgemäßer Vorrichtungen/Messräder miteinschließt.

### KURZE BESCHREIBUNG DER ZEICHNUNGSFIGUREN

Die Erfindung wird nachfolgend in der detaillierten Beschreibung anhand von Ausführungsbeispielen erläutert, wobei auf Zeichnungsfiguren Bezug genommen wird, in denen:
Fig. 1a eine Draufsicht auf einen erfindungsgemäßen Kraftaufnehmer;
Fig. 1b eine Seitenansicht eines erfindungsgemäßen Kraftaufnehmers;
Fig. 2a Querschnitte des Kraftaufnehmers entlang der Schnittlinien A-A und B-B, gemäß einem ersten Beispiel;
Fig. 2b Querschnitte des Kraftaufnehmers entlang der Schnittlinien A-A und B-B, gemäß einem zweiten Beispiel;
Fig. 3 eine schematische Ansicht eines erfindungsgemäßen Messrads;
Fig. 4 eine mögliche Verschaltung der Dehnungsmessstreifenpaare des in Fig. 3 gezeigten Messrads; und
Fig. 5 ein Flussdiagramm eines erfindungsgemäßen Verfahrens zeigt.
Dabei sind in den Zeichnungsfiguren gleiche und funktional ähnliche Elemente durch gleiche Bezugszeichen gekennzeichnet. Jedoch versteht es sich, dass nicht notwendigerweise alle Elemente in allen Zeichnungsfiguren gezeigt sind und dass die gezeigten Elemente nicht notwendigerweise maßstabsgetreu dargestellt sind. Zudem versteht es sich, dass die Figuren lediglich dazu gedacht sind die wesentlichen Konzepte der vorliegenden Erfindung zu verdeutlichen, wobei Elemente, die nicht unmittelbar zum Verständnis der Erfindung beitragen weggelassen wurden.

### BESCHREIBUNG DER AUSFÜHRUNGSARTEN

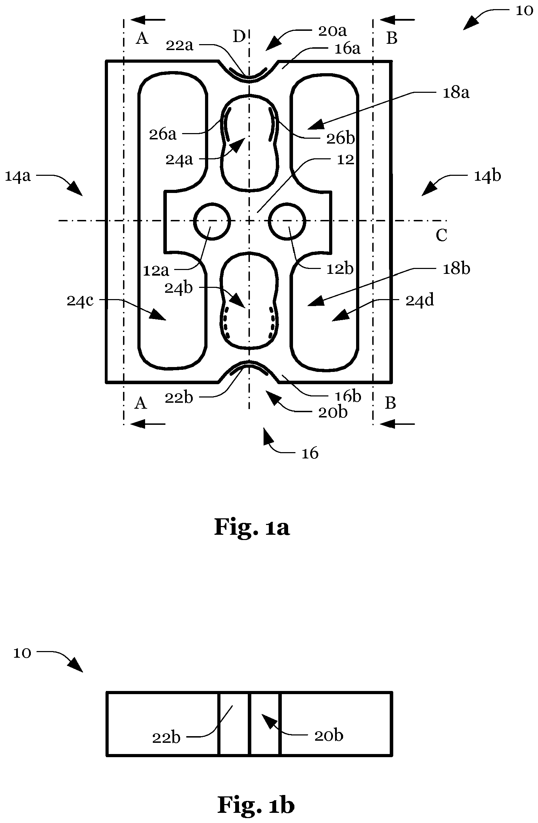

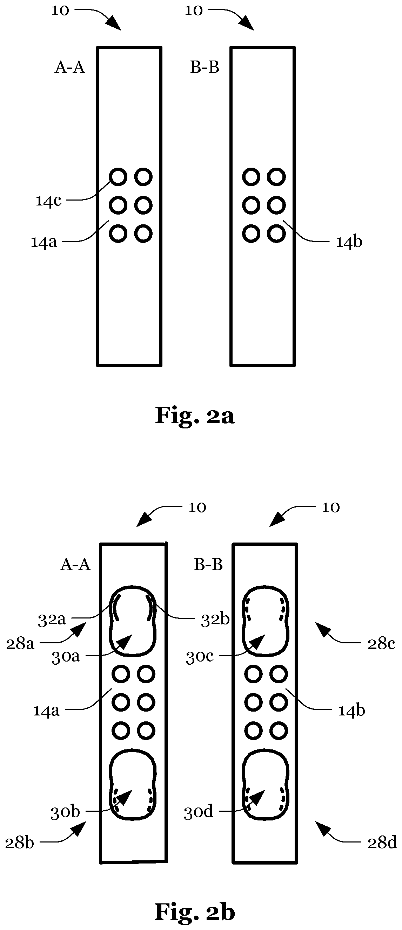

Fig. 1a, Fig. 1b, Fig. 2a und Fig. 2b zeigen Ansichten eines erfindungsgemäßen Kraftaufnehmers 10. Der Kraftaufnehmer 10 ist als plattenförmiges, monolithisches Bauteil ausgebildet (welches bspw. aus Stahl wie z. B. 42CrMo4 gefertigt wurde) und umfasst einen ersten, mittig angeordneten Oberflächenbereich 12, in den zwei Bohrungen 12a, 12b zur formschlüssigen Verbindung mit einem ersten Bauteil, wie bspw. einer Radfelge (nicht gezeigt), eingebracht sind. Dabei versteht es sich, dass anstatt der gezeigten zwei Bohrungen 12a, 12b auch drei oder mehr Bohrungen 12a, 12b oder auch Fräsungen vorgesehen sein können, die es ermöglichen, den ersten Oberflächenbereich 12 mit besagtem ersten Bauteil formschlüssig zu verbinden. Zudem oder alternativ kann die Verbindung (in Abhängigkeit von den Kräften, mit denen die Verbindung belastet wird) auch als kraftschlüssige Verbindung ausgelegt sein.

Der Kraftaufnehmer umfasst ferner zwei zweite, an gegenüberliegenden Seiten des Kraftaufnehmers 10 angeordnete Oberflächenbereiche 14a, 14b, in denen jeweils sechs Bohrungen 14c zur formschlüssigen Verbindung mit einem zweiten Bauteil, wie bspw. einer Radnabe (nicht gezeigt), eingebracht sind. Dabei versteht es sich, dass anstatt der gezeigten sechs Bohrungen 14c auch weniger oder mehr Bohrungen 14c oder auch Fräsungen vorgesehen sein können, die es ermöglichen, die zweiten Oberflächenbereiche 14a, 14b mit besagtem zweiten Bauteil formschlüssig zu verbinden. Zudem oder alternativ kann die Verbindung (in Abhängigkeit von den Kräften, mit denen die Verbindung belastet wird) auch als kraftschlüssige Verbindung ausgelegt sein.

Wie in Fig. 1a gezeigt, umfasst der Kraftaufnehmer 10 einen ersten Doppelbiegebalken 16 bestehend aus zwei zur Achse C (durch die Mitte des Kraftaufnehmers 10) spiegelsymmetrisch ausgebildeten Biegebalken 16a, 16b, über welche die zwei zweiten Oberflächenbereiche 14a, 14b miteinander verbunden sind. Die Biegebalken 16a, 16b des ersten Doppelbiegebalkens 16 sind an gegenüberliegenden Seiten des Kraftaufnehmers 10 angeordnet und durch zwei zweite Doppelbiegebalken 18a, 18b mit dem ersten Oberflächenbereich 12 verbunden, wobei die Biegebalken 16a, 16b des ersten Doppelbiegebalkens 16 nahtlos in die zwei zweiten Doppelbiegebalken 18a, 18b übergehen und dabei einen (in Draufsicht) H-förmigen Übergangsbereich ausbilden.

Die Biegebalken 16a, 16b des ersten Doppelbiegebalkens 16 weisen jeweils zwei sich im Wesentlichen parallel zur Symmetrieachse C erstreckende Endabschnitte auf, die durch einen C-förmigen Mittelteil, dessen konkave Seite nach außen zeigt, verbunden sind. Die Querschnittsfläche der Biegebalken 16a, 16b weist drei lokale Minima auf, wobei zwei der lokalen Minima symmetrisch um ein zentrales lokales Minimum liegen. In den Ausnehmungen 20a, 20b, durch welche die konkaven Seiten der C-förmigen Mittelteile ausgebildet sind, ist ein erstes Dehnungsmessstreifenpaar 22a, 22b angeordnet. Wird eine auf das erste Bauteil wirkende Kraft über besagte Doppelbiegebalken 16, 18a, 18b auf das zweite Bauteil übertragen, bewirkt eine Kraftkomponente parallel zur Achse D eine Stauchung eines der Dehnungsmessstreifen 22a, 22b und eine Dehnung des anderen der Dehnungsmessstreifen 22a, 22b. Dadurch kann auf Basis von Messsignalen, die mittels des ersten Dehnungsmessstreifenpaars 22a, 22b erzeugt werden, besagte Kraftkomponente gemessen werden.

Die Biegebalken der zweiten Doppelbiegebalken 18a, 18b erstrecken sich im Wesentlichen parallel zur Achse D und sind (zur Achse D) spiegelsymmetrisch ausgebildet. Die Biegebalken jedes zweiten Doppelbiegebalkens 18a, 18b sind dabei durch eine Ausnehmung 24a, 24b, die eine Kontur in Form einer "8" aufweist, voneinander und durch weitere (zu beiden Seiten der zweiten Doppelbiegebalken 18a, 18b ausgebildeten) Ausnehmungen 24c, 24d von den zwei zweiten Oberflächenbereichen 14a, 14b getrennt. Die Querschnittsfläche besagter Biegebalken weist dadurch jeweils zwei lokale Minima auf, die symmetrisch um ein zentrales lokales Maximum liegen. In einer oder beiden Ausnehmungen 24a, 24b, durch welche die Biegebalken des jeweiligen zweiten Doppelbiegebalkens 18a, 18b voneinander getrennt sind, ist jeweils ein zweites Dehnungsmessstreifenpaar 26a, 26b angeordnet (wobei das in der Ausnehmung 24b angeordnete zweite Dehnungsmessstreifenpaar durch gestrichelte Linien als optional gekennzeichnet ist).

Wird eine auf das erste Bauteil wirkende Kraft über die Doppelbiegebalken 16, 18a, 18b auf das zweite Bauteil übertragen, bewirkt eine Kraftkomponente parallel zur Symmetrieachse C eine Stauchung eines der Dehnungsmessstreifen 26a, 26b und eine Dehnung des anderen der Dehnungsmessstreifen 26a, 26b. Dadurch kann auf Basis von Messsignalen, die mittels des zweiten Dehnungsmessstreifenpaars 26a, 26b erzeugt werden, besagte Kraftkomponente gemessen werden.

Wie durch Fig. 2a und Fig. 2b illustriert, kann der Kraftaufnehmer 10 ferner vier dritte Doppelbiegebalken 28a, 28b, 28c, 28d aufweisen, wobei ein erster der zwei zweiten Oberflächenbereiche 14a über zwei der dritten Doppelbiegebalken 28a, 28b mit dem ersten Doppelbiegebalken 16 verbunden ist und ein zweiter der zwei zweiten Oberflächenbereiche 14b über zwei der dritten Doppelbiegebalken 28c, 28d mit dem ersten Doppelbiegebalken 16 verbunden ist. Die vier dritten Doppelbiegebalken 28a, 28b, 28c, 28d weisen jeweils zwei sich im Wesentlichen parallel zur Symmetrieachse D erstreckende Biegebalken auf, die durch eine Ausnehmung 30a, 30b, 30c, 30d, welche eine Kontur in Form einer "8" aufweist, voneinander getrennt sind.

Die Querschnittsfläche der dritten Doppelbiegebalken 28a, 28b, 28c, 28d weist zudem jeweils zwei lokale Minima auf, die symmetrisch um ein zentrales lokales Maximum liegen. In einer oder mehreren Ausnehmungen 30a, 30b, 30c, 30d, durch welche die Biegebalken des jeweiligen dritten Doppelbiegebalkens 28a, 28b, 28c, 28d voneinander getrennt sind, ist jeweils ein drittes Dehnungsmessstreifenpaar 32a, 32b angeordnet (welches in den Ausnehmungen 30b, 30c und 30d durch gestrichelte Linien als optional angedeutet ist). Wird eine auf das erste Bauteil wirkende Kraft über die Doppelbiegebalken 16, 18a, 18b, 28a, 28b, 28c, 28d auf das zweite Bauteil übertragen, bewirkt eine Kraftkomponente orthogonal zu den Symmetrieachsen C und D eine Stauchung eines der Dehnungsmessstreifen 32a, 32b und eine Dehnung des anderen der Dehnungsmessstreifen 32a, 32b. Dadurch kann auf Basis von Messsignalen, die mittels des dritten Dehnungsmessstreifenpaars 32a, 32b erzeugt werden, besagte Kraftkomponente gemessen werden.

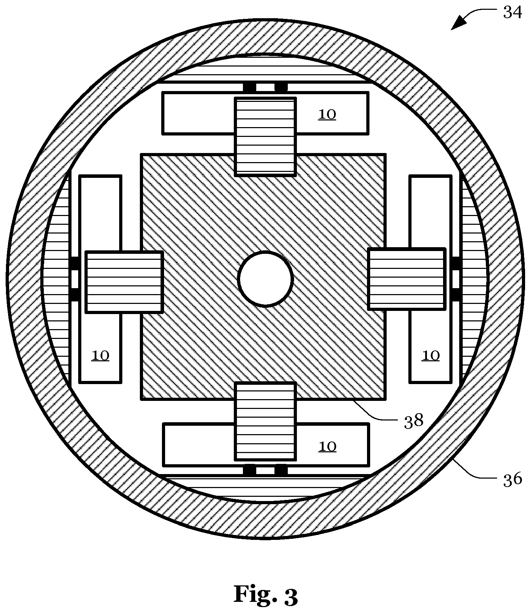

Fig. 3 zeigt eine schematische Ansicht eines erfindungsgemäßen Messrads 34. Das Messrad 34 umfasst eine Felge 36 und eine Nabe 38, die über mehrere der in Fig. 1a, Fig. 1b und Fig. 2a/Fig. 2b gezeigten Kraftaufnehmer 10 miteinander verbunden sind. Bspw. kann der erste Oberflächenbereich 12 formschlüssig mit der Felge 36 und können die zwei zweiten Oberflächenbereiche 14a, 14b formschlüssig mit der Nabe 38 verbunden sein, oder umgekehrt. In der Nabe 38 ist ein Schaltkreis (mit einem Versorgungsanschluss und/oder einer Batterie) (nicht gezeigt) angeordnet, wobei der Schaltkreis eingerichtet ist, die auf die Nabe 38 wirkenden Kräfte zu messen. Die während einer Fahrt eines mit einem oder mehreren Messrädern 34 versehenen Fahrzeugs gemessen Kräfte können dann bspw. drahtgebunden oder drahtlos zu einer Speichervorrichtung übertragen und (zum Zwecke einer Analyse/Auswertung) aufgezeichnet werden. Zudem kann im Messrad 34 ein Drehwinkelsensor (nicht gezeigt) vorgesehen sein, wobei die Auswertung des Drehwinkelsignals es ermöglicht, bspw. die Kraftkomponenten in Fahrtrichtung und orthogonal zur Fahrtrichtung zu bestimmen. Dadurch können bspw. ein Beladungszustand und Fahrmanöver ermittelt werden.

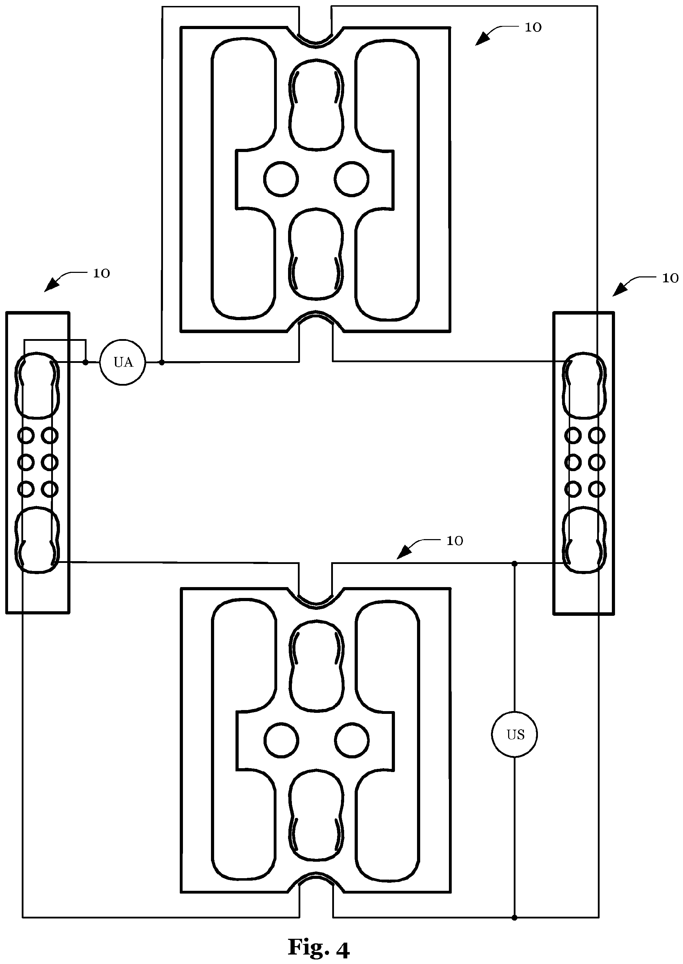

Fig. 4 illustriert eine mögliche Verschaltung der Dehnungsmessstreifenpaare 22a, 22b, 26a, 26b, 32a, 32b des in Fig. 3 gezeigten Messrads 34 zur Messung einer in eine erste kraftaufnehmerfeste Richtung wirkenden Kraft als Vollbrücke (mit "US" als Versorgungsspannung und "UA" als Messignal). Dabei werden die Dehnungsmessstreifen 22a, 22b, 26a, 26b, 32a, 32b der Dehnungsmessstreifenpaare 22a, 22b, 26a, 26b, 32a, 32b, welche an Doppelbiegebalken 16, 18a, 18b, 28a, 28b, 28c, 28d angeordnet sind, die (unter Berücksichtigung der Ausrichtung des jeweiligen Kraftaufnehmers 10) zur Messung derselben Kraftkomponente ausgelegt sind, auf die Zweige der Vollbrücke aufgeteilt. Es versteht sich jedoch, dass die vorliegende Erfindung nicht auf die in Fig. 4 beispielhaft gezeigte Verschaltung der Dehnungsmessstreifen 22a, 22b, 26a, 26b, 32a, 32b beschränkt ist, sondern, dass eine Vielzahl an alternativen Verschaltungsmöglichkeiten existiert.

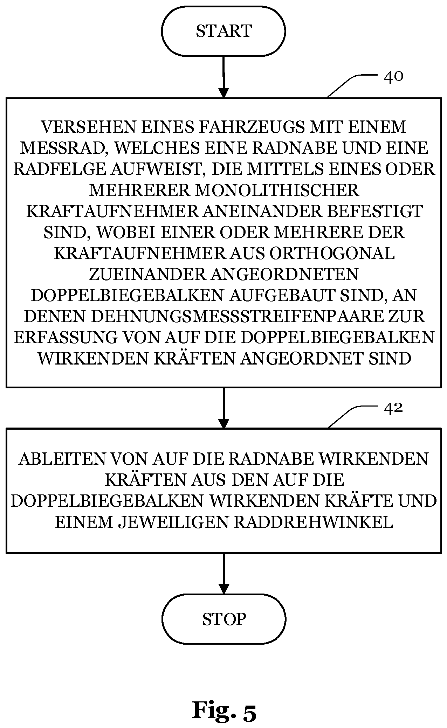

Fig. 5 zeigt ein Flussdiagramm eines erfindungsgemäßen Verfahrens. Das Verfahren beginnt mit dem Schritt 40 des Versehens eines Fahrzeugs mit dem Messrad 34, welches eine Radnabe 38 und eine Radfelge 36 aufweist, die mittels eines oder mehrerer monolithischer Kraftaufnehmer 10 aneinander befestigt sind. Einer oder mehrere der Kraftaufnehmer 10 sind dabei aus orthogonal zueinander angeordneten Doppelbiegebalken 16, 18a, 18b, 28a, 28b, 28c, 28d aufgebaut, an denen Dehnungsmessstreifenpaare 22a, 22b, 26a, 26b, 32a, 32b zur Erfassung von auf die Doppelbiegebalken 16, 18a, 18b, 28a, 28b, 28c, 28d wirkenden Kräften angeordnet sind.

Wie in Fig. 1a, Fig. 1b, Fig. 2a/Fig. 2b gezeigt, können die Doppelbiegebalken 16, 18a, 18b, 28a, 28b, 28c, 28d dabei miteinander in Reihe verbunden sein, wobei aufeinanderfolgende Doppelbiegebalken 16, 18a, 18b, 28a, 28b, 28c, 28d zueinander orthogonal angeordnet sind, so dass sie auf orthogonale Kraftkomponenten ansprechen. In Schritt 42 wird das Verfahren mit dem Ableiten von auf die Radnabe 38 wirkenden Kräften aus den auf die Doppelbiegebalken 16, 18a, 18b, 28a, 28b, 28c, 28d wirkenden Kräften und einem jeweiligen Raddrehwinkel fortgeführt.

### LISTE DER BEZUGSZEICHEN

- 10: Kraftaufnehmer
- 12: erster Oberflächenbereich
- 12a, 12b: Bohrungen
- 14a, 14b: zweite Oberflächenbereiche
- 14c: Bohrung
- 16: erster Doppelbiegebalken
- 16a, 16b: Biegebalken
- 18a, 18b: zweite Doppelbiegebalken
- 20a, 20b: Ausnehmungen
- 22a, 22b: erstes Dehnungsmessstreifenpaar
- 24a, 24b: Ausnehmungen
- 24c, 24d: Ausnehmungen
- 26a, 26b: zweites Dehnungsmessstreifenpaar
- 28a, 28b: dritte Doppelbiegebalken
- 28c, 28d: dritte Doppelbiegebalken
- 30a, 30b: Ausnehmungen
- 30c, 30d: Ausnehmungen
- 32a, 32b: drittes Dehnungsmessstreifenpaar
- 34: Messrad
- 36: Felge
- 38: Nabe
- 40: Verfahrensschritt
- 42: Verfahrensschritt

## Patentansprüche

1. Vorrichtung, umfassend:
einen Kraftaufnehmer (10), mit:
einem ersten Oberflächenbereich (12), ausgebildet zur form- oder kraftschlüssigen Verbindung mit einem ersten Bauteil;
zwei zweiten Oberflächenbereichen (14a, 14b), ausgebildet zur form- oder kraftschlüssigen Verbindung mit einem zweiten Bauteil;
einem ersten Doppelbiegebalken (16), über den die zwei zweiten Oberflächenbereiche (14a, 14b) verbunden sind; und
zwei zweiten Doppelbiegebalken (18a, 18b), über die der erste Oberflächenbereich (12) mit dem ersten Doppelbiegebalken (16) verbunden ist;
wobei eine auf das erste Bauteil wirkende Kraft durch besagte Doppelbiegebalken (16, 18a, 18b) auf das zweite Bauteil übertragen wird;
ein erstes Dehnungsmessstreifenpaar (22a, 22b), wobei die Dehnungsmessstreifen (22a, 22b) des ersten Dehnungsmessstreifenpaars (22a, 22b) am ersten Doppelbiegebalken (16) angeordnet sind;
ein zweites Dehnungsmessstreifenpaar (26a, 26b), wobei die Dehnungsmessstreifen (26a, 26b) des zweiten Dehnungsmessstreifenpaars (26a, 26b) an Biegebalken der zwei zweiten Doppelbiegebalken (18a, 18b) angeordnet sind; und
einen Schaltkreis, eingerichtet zum Messen:
einer in eine erste kraftaufnehmerfeste Richtung auf besagten ersten Doppelbiegebalken (16) wirkenden Kraft auf Basis von Messsignalen, die mittels des ersten Dehnungsmessstreifenpaars (22a, 22b) erzeugt werden; und
einer in eine zweite kraftaufnehmerfeste Richtung auf besagte zweite Doppelbiegebalken (18a, 18b) wirkenden Kraft auf Basis von Messsignalen, die mittels des zweiten Dehnungsmessstreifenpaars (26a, 26b) erzeugt werden;
wobei die erste kraftaufnehmerfeste Richtung und die zweite kraftaufnehmerfeste Richtung unterschiedlich sind,
**dadurch gekennzeichnet, dass** der Kraftaufnehmer (10) ferner vier dritte Doppelbiegebalken (28a, 28b, 28c, 28d) aufweist und ein erster der zwei zweiten Oberflächenbereiche (14a) über zwei der dritten Doppelbiegebalken (28a, 28b) mit dem ersten Doppelbiegebalken (16) verbunden ist und ein zweiter der zwei zweiten Oberflächenbereiche (14b) über zwei der dritten Doppelbiegebalken (28c, 28d) mit dem ersten Doppelbiegebalken (16) verbunden ist;
die Vorrichtung ferner ein drittes Dehnungsmessstreifenpaar (32a, 32b) aufweist, wobei die Dehnungsmessstreifen (32a, 32b) des dritten Dehnungsmessstreifenpaars (32a, 32b) an Biegebalken der vier dritten Doppelbiegebalken (28a, 28b, 28c, 28d) angeordnet sind; und
der Schaltkreis ferner eingerichtet ist, eine in eine dritte kraftaufnehmerfeste Richtung auf besagte dritte Doppelbiegebalken (28a, 28b, 28c, 28d) wirkende Kraft auf Basis von Messsignalen, die mittels des dritten Dehnungsmessstreifenpaars (32a, 32b) erzeugt werden zu messen;
wobei die erste kraftaufnehmerfeste Richtung, die zweite kraftaufnehmerfeste Richtung und die dritte kraftaufnehmerfeste Richtung unterschiedlich, nämlich orthogonal zueinander, sind.

2. Vorrichtung nach Anspruch 1, wobei die zwei zweiten Doppelbiegebalken (18a, 18b) zwischen Biegebalken (16a, 16b) des ersten Doppelbiegebalkens (16) angeordnet sind.

3. Vorrichtung nach einem der Ansprüche 1-2, wobei der Kraftaufnehmer (10) als monolithisches Bauteil ausgebildet ist.

4. Vorrichtung nach Anspruch 3, wobei das monolithische Bauteil, betrachtet aus der ersten oder zweiten kraftaufnehmerfesten Richtung, eine rechteckige Kontur aufweist.

5. Vorrichtung nach Anspruch 3 oder 4, wobei das monolithische Bauteil plattenförmig ist und die Doppelbiegebalken (16, 18a, 18b,28a, 28b, 28c, 28d) durch Ausnehmungen (24a, 24b, 24c, 24d, 30a, 30b, 30c, 30d) in dem plattenförmigen Bauteil ausgeformt sind.

6. Vorrichtung nach einem der Ansprüche 3-5, wobei das monolithische Bauteil plattenförmig ist und Ausnehmungen (20a, 20b, 24a, 24b, 30a, 30b, 30c, 30d) aufweist, in denen die Dehnungsmessstreifen (22a, 22b, 26a, 26b, 32a, 32b) angeordnet sind.

7. Vorrichtung nach einem der Ansprüche 1-6, wobei die Dehnungsmessstreifen (22a, 22b, 26a, 26b, 32a, 32b) spiegelsymmetrisch zu einer Spiegelsymmetrieachse (C, D) des Doppelbiegebalkens (16, 18a, 18b,28a, 28b, 28c, 28d), an dem das jeweilige Dehnungsmessstreifenpaar (22a, 22b, 26a, 26b, 32a, 32b) angeordnet ist, platziert sind.

8. Messrad (34), umfassend:
eine Vorrichtung gemäß Anspruch 1;
wobei zwei baugleiche, plattenförmige, monolithische Kraftaufnehmer (10), die eingerichtet und vorgesehen sind, eine Nabe (38) des Messrads (34) mit einer Felge (36) des Messrads (34) zu verbinden und auf die Radnabe (38) wirkende Kräfte auf die Felge (36) zu übertragen.

9. Messrad (34) nach Anspruch 8, wobei die zwei baugleichen, plattenförmigen, monolithischen Kraftaufnehmer (10) parallel oder orthogonal zueinander angeordnet sind.

10. Messrad (34) nach einem der Ansprüche 8-9, ferner umfassend einen Drehwinkelsensor, eingerichtet zur Erfassung einer Drehung des Messrads (34).

11. Fahrzeug mit einem Messrad (34) nach einem der Ansprüche 8-10 und einer Speichervorrichtung zur Aufzeichnung von auf die Radnabe (38) wirkenden Kräften während einer Fahrt des Fahrzeugs.

12. Verfahren, umfassend:
Versehen (40) eines Fahrzeugs mit einem Messrad (34), welches eine Radnabe (38) und eine Radfelge (36) aufweist, die mittels eines oder mehrerer monolithischer Kraftaufnehmer (10) aneinander befestigt sind, wobei einer oder mehrere der Kraftaufnehmer (10) aus orthogonal zueinander angeordneten Doppelbiegebalken (16, 18a, 18b, 28a, 28b, 28c, 28d) aufgebaut sind, an denen Dehnungsmessstreifenpaare (22a, 22b, 26a, 26b, 32a, 32b) zur Erfassung von auf die Doppelbiegebalken (16, 18a, 18b, 28a, 28b, 28c, 28d) wirkenden Kräften angeordnet sind; und
Ableiten (42) von auf die Radnabe (38) wirkenden Kräften aus den auf die Doppelbiegebalken (16, 18a, 18b, 28a, 28b, 28c, 28d) wirkenden Kräften und einem jeweiligen Raddrehwinkel,
**dadurch gekennzeichnet, dass** das Messrad (34) gemäß einem der Ansprüche 8 bis 10 ausgebildet ist.

## Claims

1. Device comprising:
a load cell (10), having:
a first surface region (12), designed for positive or non-positive connection to a first component;
two second surface regions (14a, 14b), designed for positive or non-positive connection to a second component;
a first double bending beam (16) via which the two second surface regions (14a, 14b) are connected; and
two second double bending beams (18a, 18b) via which the first surface region (12) is connected to the first double bending beam (16);
a force acting on the first component being transmitted to the second component by said double bending beam (16, 18a, 18b);
a first strain gauge pair (22a, 22b), the strain gauges (22a, 22b) of the first strain gauge pair (22a, 22b) being arranged on the first double bending beam (16);
a second strain gauge pair (26a, 26b), the strain gauges (26a, 26b) of the second strain gauge pair (26a, 26b) being arranged on bending beams of the two second double bending beams (18a, 18b); and
a circuit configured to measure:
a force acting in a first direction fixed with respect to the load cell on said first double bending beam (16) on the basis of measuring signals generated by means of the first strain gauge pair (22a, 22b); and
a force acting in a second direction fixed with respect to the load cell on said second double bending beam (18a, 18b) on the basis of measuring signals generated by means of the second strain gauge pair (26a, 26b);
the first direction fixed with respect to the load cell and the second direction fixed with respect to the load cell being different,
**characterized in that** the load cell (10) further has four third double bending beams (28a, 28b, 28c, 28d), and a first of the two second surface regions (14a) is connected to the first double bending beam (16) via two of the third double bending beams (28a, 28b), and a second of the two second surface regions (14b) is connected to the first double bending beam (16) via two of the third double bending beam (28c, 28d);
the device further comprises a third strain gauge pair (32a, 32b), the strain gauges (32a, 32b) of the third strain gauge pair (32a, 32b) being arranged on bending beams of the four third double bending beams (28a, 28b, 28c, 28d); and
the circuit is further configured to measure a force acting in a third direction fixed with respect to the load cell onto said third double bending beam (28a, 28b, 28c, 28d) on the basis of measuring signals generated by means of the third strain gauge pair (32a, 32b);
the first direction fixed with respect to the load cell, the second direction fixed with respect to the load cell and the third direction fixed with respect to the load cell being different, namely orthogonal to one another.

2. Device according to claim 1, wherein the two second double bending beams (18a, 18b) are arranged between bending beams (16a, 16b) of the first double bending beam (16).

3. Device according to either claim 1 or claim 2, wherein the load cell (10) is designed as a monolithic component.

4. Device according to claim 3, wherein the monolithic component, when viewed from the first or second direction fixed with respect to the load cell, has a rectangular contour.

5. Device according to either claim 3 or claim 4, wherein the monolithic component is planar and the double bending beams (16, 18a, 18b, 28a, 28b, 28c, 28d) are formed by recesses (24a, 24b, 24c, 24b, 30a, 30b, 30c, 30b) in the planar component.

6. Device according to any of claims 3-5, wherein the monolithic component is planar and has recesses (20a, 20b, 24a, 24b, 30a, 30b, 30c, 30d) in which the strain gauges (22a, 22b, 26a, 26b, 32a, 32b) are arranged.

7. Device according to any of claims 1-6, wherein the strain gauges (22a, 22b, 26a, 26b, 32a, 32b) are placed mirror-symmetrically with respect to a mirror symmetry axis (C, D) of the double bending beam (16, 18a, 18b, 28a, 28b, 28c, 28d) on which the corresponding strain gauge pair (22a, 22b, 26a, 26b, 32a, 32b) is arranged.

8. Measuring wheel (34) comprising:
a device according to claim 1;
wherein two identical, planar, monolithic load cells (10) are configured and intended to connect a hub (38) of the measuring wheel (34) to a rim (36) of the measuring wheel (34), and to transmit forces acting on the wheel hub (38) to the rim (36).

9. Measuring wheel (34) according to claim 8, wherein the two identical, planar, monolithic load cells (10) are arranged in parallel with or orthogonally to one another.

10. Measuring wheel (34) according to either claim 8 or claim 9, further comprising a rotary position sensor configured to detect a rotation of the measuring wheel (34).

11. Vehicle comprising a measuring wheel (34) according to any of claims 8-10 and a storage device for recording forces acting on the wheel hub (38) while the vehicle is in motion.

12. Method comprising:
providing (40) a vehicle having a measuring wheel (34), which has a wheel hub (38) and a wheel rim (36) that are fastened to one another by means of one or more monolithic load cells (10), one or more of the load cells (10) being constructed from double bending beams (16, 18a, 18b, 28a, 28b, 28c, 28d) arranged orthogonally to one another, on which strain gauge pairs (22a, 22b, 26a, 26b, 32a, 32b) are arranged for detecting forces acting on the double bending beams (16, 18a, 18b, 28a, 28b, 28c, 28d); and
deriving (42) forces acting on the wheel hub (38) from the forces acting on the double bending beams (16, 18a, 18b, 28a, 28b, 28c, 28d) and a corresponding wheel angle of rotation,
**characterized in that** the measuring wheel (34) is designed according to any of claims 8 to 10.

## Revendications

1. Dispositif, comprenant :
un capteur de force (10), comportant :
une première zone de surface (12), réalisée pour être reliée par complémentarité de formes ou à force à un premier composant ;
deux deuxièmes zones de surface (14a, 14b), réalisées pour être reliées par complémentarité de formes ou à force à un deuxième composant ;
une première double barre de flexion (16), par l'intermédiaire de laquelle les deux deuxièmes zones de surface (14a, 14b) sont reliées ; et
deux deuxièmes doubles barres de flexion (18a, 18b), par l'intermédiaire desquelles la première zone de surface (12) est reliée à la première double barre de flexion (16) ;
une force agissant sur le premier composant étant transmise au deuxième composant par ladite double barre de flexion (16, 18a, 18b) ;
une première paire de jauges extensométriques (22a, 22b), les jauges extensométriques (22a, 22b) de la première paire de jauges extensométriques (22a, 22b) étant disposées sur la première double barre de flexion (16) ;
une deuxième paire de jauges extensométriques (26a, 26b), les jauges extensométriques (26a, 26b) de la deuxième paire de jauges extensométriques (26a, 26b) étant disposées sur des barres de flexion de la deuxième double barre de flexion (18a, 18b) ; et
un circuit, conçu pour la mesure :
d'une force agissant dans une première direction solidaire du capteur de force sur ladite première double barre de flexion (16) sur la base de signaux de mesure qui sont générés à l'aide de la première paire de jauges extensométriques (22a, 22b) ; et
d'une force agissant dans une deuxième direction solidaire du capteur de force sur ladite deuxième double barre de flexion (18a, 18b) sur la base de signaux de mesure qui sont générés à l'aide de la deuxième paire de jauges extensométriques (26a, 26b) ;
la première direction solidaire du capteur de force et la deuxième direction solidaire du capteur de force étant différentes,
**caractérisé en ce que** le capteur de force (10) présente en outre quatre troisièmes doubles barres de flexion (28a, 28b, 28c, 28d) et une première des deux deuxièmes zones de surface (14a) est reliée à la première double barre de flexion (16) par l'intermédiaire de deux des troisièmes doubles barres de flexion (28a, 28b) et une deuxième des deux deuxièmes zones de surface (14b) est reliée à la première double barre de flexion (16) par l'intermédiaire de deux des troisièmes doubles barres de flexion (28c, 28d) ;
le dispositif présente en outre une troisième paire de jauges extensométriques (32a, 32b), les jauges extensométriques (32a, 32b) de la troisième paire de jauges extensométriques (32a, 32b) étant disposées sur des barres de flexion des quatre troisièmes doubles barres de flexion (28a, 28b, 28c, 28d) ; et
le circuit est en outre conçu pour mesurer une force agissant dans une troisième direction solidaire du capteur de force sur ladite troisième double barre de flexion (28a, 28b, 28c, 28d) sur la base de signaux de mesure qui sont générés à l'aide de la troisième paire de jauges extensométriques (32a, 32b) ;
la première direction solidaire du capteur de force, la deuxième direction solidaire du capteur de force et la troisième direction solidaire du capteur de force étant différentes, à savoir orthogonales les unes aux autres.

2. Dispositif selon la revendication 1, les deux deuxièmes doubles barres de flexion (18a, 18b) étant disposées entres des barres de flexion (16a, 16b) de la première double barre de flexion (16).

3. Dispositif selon l'une des revendications 1 et 2, le capteur de force (10) étant réalisé sous forme de composant monolithique.

4. Dispositif selon la revendication 3, le composant monolithique, considéré à partir de la première ou de la deuxième direction solidaire du capteur de force, présentant un contour rectangulaire.

5. Dispositif selon la revendication 3 ou 4, le composant monolithique étant en forme de plaque et la double barre de flexion (16, 18a, 18b, 28a, 28b, 28c, 28d) étant formée par des évidements (24a, 24b, 24c, 24b, 30a, 30b, 30c, 30b) dans le composant en forme de plaque.

6. Dispositif selon l'une des revendications 3 à 5, le composant monolithique étant en forme de plaque et présentant des évidements (20a, 20b, 24a, 24b, 30a, 30b, 30c, 30d) dans lesquels les jauges extensométriques (22a, 22b, 26a, 26b, 32a, 32b) sont disposées.

7. Dispositif selon l'une des revendications 1 à 6, les jauges extensométriques (22a, 22b, 26a, 26b, 32a, 32b) étant placées en symétrie miroir par rapport à un axe de symétrie miroir (C, D) de la double barre de flexion (16, 18a, 18b, 28a, 28b, 28c, 28d) sur laquelle la paire respective de jauges extensométriques (22a, 22b, 26a, 26b, 32a, 32b) est disposée.

8. Roue de mesure (34), comprenant :
un dispositif selon la revendication 1 ;
deux capteurs de force (10) monolithiques, en forme de plaques, de construction identique étant conçus et prévus pour relier un moyeu (38) de la roue de mesure (34) à une jante (36) de la roue de mesure (34) et pour transmettre à la jante (36) des forces agissant sur le moyeu de roue (38).

9. Roue de mesure (34) selon la revendication 8, les deux capteurs de force (10) monolithiques, en forme de plaques, de construction identique étant disposés parallèlement ou orthogonalement l'un à l'autre.

10. Roue de mesure (34) selon l'une des revendications 8 et 9, comprenant en outre un capteur d'angle de rotation, conçu pour la détection d'une rotation de la roue de mesure (34).

11. Véhicule comportant une roue de mesure (34) selon l'une des revendications 8 à 10 et un dispositif mémoire permettant l'enregistrement de forces agissant sur le moyeu de roue (38) pendant une conduite du véhicule.

12. Procédé, comprenant :
le fait de pourvoir (40) un véhicule d'une roue de mesure (34), laquelle présente un moyeu de roue (38) et une jante de roue (36) qui sont fixés l'un à l'autre à l'aide d'un ou plusieurs capteurs de force (10) monolithiques, un ou plusieurs des capteurs de force (10) étant construit(s) à partir de doubles barres de flexion (16, 18a, 18b, 28a, 28b, 28c, 28d) disposées orthogonalement les unes aux autres, sur lesquelles sont disposées des paires de jauges extensométriques (22a, 22b, 26a, 26b, 32a, 32b) permettant la détection de forces agissant sur les doubles barres de flexion (16, 18a, 18b, 28a, 28b, 28c, 28d) ; et
le fait de déduire (42) des forces agissant sur le moyeu de roue (38) à partir des forces agissant sur les doubles barres de flexion (16, 18a, 18b, 28a, 28b, 28c, 28d) et d'un angle de rotation de roue respectif,
**caractérisé en ce que** la roue de mesure (34) est conçue selon l'une des revendications 8 à 10.
